# EUROPEAN PATENT APPLICATION

(11) **EP 2 827 232 A1**
(43) Date of publication of application: **21.01.2015**
(21) Application number: 13760852.7
(22) Date of filing: 13.03.2013
(51) Int. Cl.: G06F 3/048, G06F 3/023, G06F 3/041, G06F 3/0488, G06F 17/22, G06F 17/27, H03M 11/04, H04M 1/247

(54) **CHARACTER INPUT DEVICE AND CHARACTER INPUT METHOD**

(30) Priority: 13.03.2012 JP 2012055884
(71) Applicant: NTT Docomo, Inc., Tokyo 100-6150 (JP)
(72) Inventor: GAO Hongyan, Tokyo 100-6150 (JP); NAKAGAWA Yoshiko, Tokyo 100-6150 (JP); MAINO Takayuki, Tokyo 100-6150 (JP); KAGAYA Minoru, Tokyo 100-6150 (JP)
(74) Representative: Beder, Jens
(86) International application number: PCT/JP2013/057002
(87) International publication number: WO 2013/137311

(57) **Abstract**

A character input device includes: a display for displaying a plurality of character candidates for an input character; a use frequency database that accumulates, for each character, a first character use frequency of use as first character and a successive use frequency of at least one character used in succession to the character; a first character extractor that extracts a highly-ranked predetermined number of frequently-used characters used frequently as first character, based on first character use frequencies of respective characters; a successive use frequency extractor that extracts, for at least one frequently-used character, the successive use frequency of at least one character used in succession to the frequently-used character; and a display controller that displays the predetermined number of frequently-used characters as arranged in a center on the display and displays the characters other than frequently-used characters as arranged around the frequently-used characters, based on the successive use frequencies.

## Description

### Technical Field

The present invention relates to a character input device and a character input method for a user to select a desired character from a character group displayed on a display, thereby implementing input of the character.

### Background Art

Conventionally-known character input means in information processing equipment such as smartphones include a type in which a user selects a desired character from a character group displayed on a display, thereby implementing input of the character. It is, however, the present status that the known arrangements of the displayed character group include the arrangement of the numerical keypad type, the arrangement of the QWERTY keyboard type, and so forth, all of which are fixed arrangements and none of which is an arrangement taking frequencies of input of individual characters into consideration.

In light of the present status, Patent Literature 1 below proposes a technology for counting use frequencies for respective keys and displaying keys with high use frequencies together in an initial state, at a display mounted on a digital complex machine.

### Citation List

### Patent Literature

Patent Literature 1: Japanese Patent Application Laid-open Gazette No. 2005-37497

### Summary of Invention

### Technical Problem

However, the technology of Patent Literature 1 fails to go to the extent of giving additional consideration to association of two or more keys (e.g., a plurality of characters) used in succession and, in this regard, there was yet room for improvement in enhancement of efficiency of character input operation.

It is therefore an object of the present invention to achieve further enhancement of efficiency of the character input operation with consideration to association of a plurality of characters used in succession, thereby realizing smooth and quick character input.

### Solution to Problem

A character input device according to one aspect of the present invention includes: a display for displaying a plurality of character candidates for a character to be input; a use frequency database that accumulates, for each character, a frequency of use as first character (which will be referred to hereinafter as "first character use frequency") and a use frequency of at least one character used in succession to the character (which will be referred to hereinafter as "successive use frequency"); a first character extractor that extracts, out of characters used frequently as first character (which will be referred to hereinafter as "frequently-used characters"), a highly-ranked predetermined number of frequently-used characters, based on the first character use frequencies of respective characters; a successive use frequency extractor that extracts, for at least one frequently-used character, the successive use frequency of at least one character used in succession to the frequently-used character, from the use frequency database; and a display controller that displays the predetermined number of frequently-used characters as arranged in a center on the display and that displays the characters other than the frequently-used characters as arranged around the frequently-used characters, based on the successive use frequencies.

In this character input device, the first character extractor extracts the highly-ranked predetermined number of frequently-used characters used frequently as first character, based on the first character use frequencies of the respective characters; the successive use frequency extractor extracts, for at least one frequently-used character (e.g., (1) a character with the highest first character use frequency (which will be referred to hereinafter as "most frequently-used character"), (2) a character first used out of the frequently-used characters, or (3) all of the at least one frequently-used character), the successive use frequency of at least one character used in succession to the frequently-used character, from the use frequency database; the display controller displays the predetermined number of frequently-used characters as arranged in the center on the display and displays the characters other than the frequently-used characters as arranged around the frequently-used characters, based on the successive use frequencies. Thereby, the efficiency of the character input operation is further enhanced with consideration not only to the use frequencies of the individual characters but also to the association of a plurality of characters used in succession, and smooth and quick character input is realized.

The foregoing character input device may further include: a calculation accumulator that calculates, for each character, the first character use frequency of use as first character and the successive use frequency of at least one character used in succession to the character, based on past character use histories, and accumulates the calculated first character use frequency and successive use frequency in the use frequency database. In this case, the calculation accumulator automatically accumulates the first character use frequencies and the successive use frequencies in the use frequency database and the character input device can perform appropriate display control of characters based on up-to-date information about the first character use frequencies and the successive use frequencies. It is noted that it is not essential to provide the calculation accumulator in the character input device and that the character input device may be configured to acquire the up-to-date information about the first character use frequencies and the successive use frequencies calculated based on the past character use histories, from the outside and put the information in the use frequency database.

The foregoing display controller may perform, for example, the display control as described below. Namely, the display controller may display the predetermined number of frequently-used characters as arranged on a ring in the center on the display, and display the characters other than the frequently-used characters as arranged on at least one ring with a radius larger than that of the ring in the center, based on the successive use frequencies. Furthermore, the display controller may display the predetermined number of frequently-used characters as arranged on a ring in the center on the display, and display the characters other than the frequently-used characters as arranged on an arc of at least one Japanese fan shape centered on the frequently-used character on the display, based on the successive use frequencies.

The invention associated with the aforementioned character input device can also be considered as an invention associated with a character input method and can be described as below. The invention associated with the following character input method achieves the same action and effect.

Namely, a character input method according to one aspect of the present invention is a character input method executed by a character input device including: a display for displaying a plurality of character candidates for a character to be input; and a use frequency database accumulating, for each character, a first character use frequency of use as first character and a successive use frequency of at least one character used in succession to the character, the character input method includes: an extraction step of extracting a highly-ranked predetermined number of frequently-used characters used frequently as first character, based on the first character frequencies of respective characters, and extracting, for at least one frequently-used character, the successive use frequency of at least one character used in succession to the frequently-used character, from the use frequency database; and a display control step of displaying the predetermined number of frequently-used characters as arranged in a center on the display, and displaying the characters other than the frequently-used characters as arranged around the frequently-used characters, based on the successive use frequencies, wherein the first character use frequencies and successive use frequencies accumulated in the use frequency database are continuously updated, and wherein the extraction step and the display control step are executed based on the first character use frequencies and successive use frequencies updated.

### Advantageous Effect of Invention

According to one aspect of the present invention, the efficiency of the character input operation is further enhanced with consideration to the association of a plurality of characters used in succession, thereby realizing smooth and quick character input.

### Brief Description of Drawings

Fig. 1 is a function block diagram of a character input device according to an embodiment of the invention.
Fig. 2 is a flowchart showing a calculation accumulation process of use frequencies.
Fig. 3 is a flowchart showing a display control process of characters.
Fig. 4 is a drawing showing a first example of information accumulated in a use frequency database.
Fig. 5 is a drawing showing a second example of information accumulated in the use frequency database.
Fig. 6 is a drawing for explaining a first example of character arrangement.
Fig. 7 is a drawing for explaining a second example of character arrangement.
Fig. 8 is a hardware configuration diagram of the character input device.
Fig. 9 is a configuration diagram of a character input device with constitutive features essential for implementation of the action and effect according to the present invention.

### Description of Embodiments

Embodiments according to the present invention will be described below with reference to the drawings.

### [Configuration of Character Input Device]

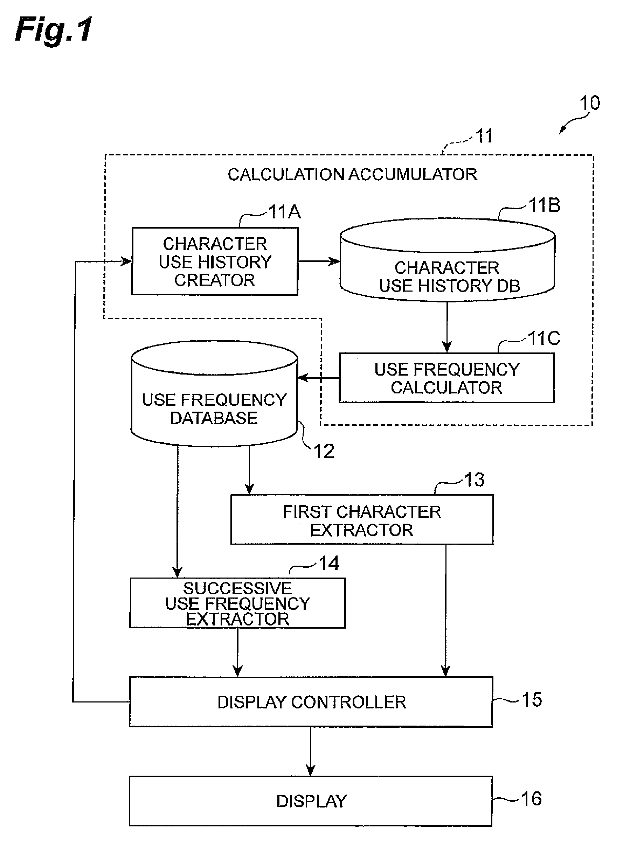

Fig. 1 is a block diagram showing a functional configuration of a character input device 10. The character input device 10 is constructed of an information processing device (e.g., a smartphone or the like) of a type in which a user selects a desired character from a character group displayed on a display, thereby implementing input of the character.

As shown in Fig. 1, the character input device 10 is functionally provided with a calculation accumulator 11, a use frequency database 12, a first character extractor 13, a successive use frequency extractor 14, a display controller 15, and a display 16. Functions and operations of the individual constituent portions will be described later.

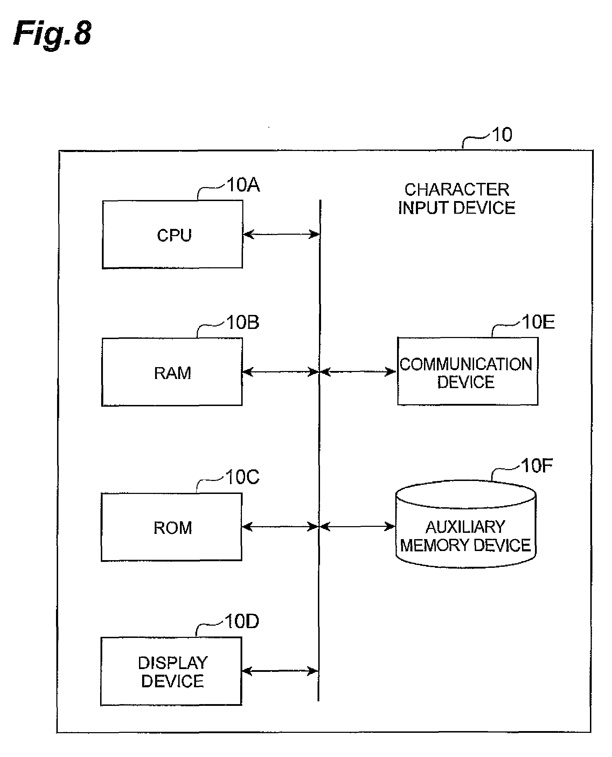

Fig. 8 is a hardware configuration diagram of the character input device 10. The character input device 10 is configured in terms of hardware as a computer system including a CPU 10A, a RAM 10B and a ROM 10C as main memory devices, a display device 10D such as a display, a communication device 10E as data transmission/reception device, an auxiliary memory device 10F such as a hard disk and a flash memory, and so on. The display device 10D does not only provide display of information but also provides display of a keyboard screen for character input. It is noted that, besides the configuration of Fig. 8, the character input device may be provided, for example, with input devices such as microphone and camera and an output device such as a speaker.

Each of the functions shown in Fig. 1 is implemented in such a manner that predetermined computer software is read onto the hardware such as the CPU 10A and RAM 10B shown in Fig. 8 and, in accordance with the computer software under control of the CPU 10A, the display device 10D and the communication device 10E and others are made to operate and readout and writing of data is carried out from and into the RAM 10B and the auxiliary memory device 10F.

Referring again to Fig. 1, each of the functional elements of the character input device 10 will be described. The display 16 shown in Fig. 1 is a part for displaying a plurality of character candidates for a character to be input, and the use frequency database 12 is a database that accumulates, for each character, a first character use frequency of use as first character and a successive use frequency of at least one character used in succession to the character.

The calculation accumulator 11 is a part that calculates, for each character, a first character use frequency of use as first character and a successive use frequency of at least one character used in succession to the character, based on past character use histories, and accumulates them in the use frequency database 12. This calculation accumulator 11 is configured, as an example, to include a character use history creator 11A, a character use history database 11B, and a use frequency calculator 11C. The character use history creator 11A creates, with use of a character, a history about what character was used (which will be referred to hereinafter as "character use history"), and accumulates the created character use history as a log in the character use history database 11B. The use frequency calculator 11C calculates, for each character, a first character use frequency of use as first character and a successive use frequency of at least one character used in succession to the character, based on the character use histories accumulated in the character use history database 11B, and accumulates them in the use frequency database 12.

The first character extractor 13 is a part that, based on the first character use frequencies of the respective characters, extracts a highly-ranked predetermined number of frequently-used characters (five characters in below-described examples) used frequently as first character, and the successive use frequency extractor 14 is a part that extracts, for at least one frequently-used character, a successive use frequency of at least one character used in succession to the frequently-used character, from the use frequency database 12.

The display controller 15 is a part that displays the predetermined number of frequently-used characters (five characters in the below examples) as arranged in a center on the display 16 and displays the characters other than the frequently-used characters as arranged around the frequently-used characters on the display 16, based on the successive use frequencies. Examples of arrangement of the characters will be described later.

### [Calculation Accumulation Process of Use Frequencies]

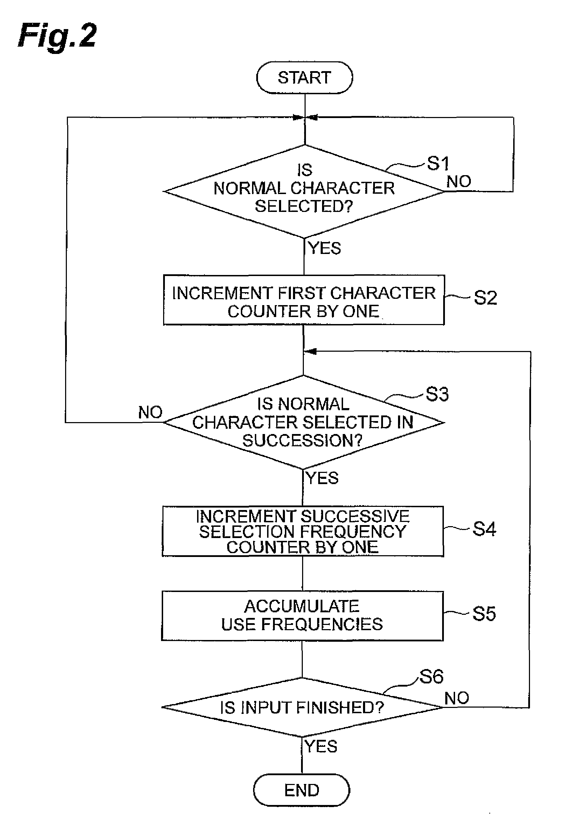

A calculation accumulation process of use frequencies will be described below using Fig. 2. The calculation accumulation process of use frequencies in Fig. 2 is executed by the calculation accumulator 11. Since in the present embodiment input of character is assumed to be carried out by selecting one character from a plurality of character candidates displayed, the "input" of character will also be expressed as "selection" of character in the present specification in some occasions.

When any character is selected, the calculation accumulator 11 first determines whether a normally-used character (which will be referred to hereinafter as "normal character"), except for symbols and special characters (e.g., pictorial symbols or the like), is selected or not (step S1 in Fig. 2). When a normal character is selected, a first character counter for the selected normal character is incremented by one (step S2).

Next, the calculation accumulator 11 determines whether any normal character is selected in succession or not (step S3). The term "selected in succession" herein means that the next character is selected in succession to the first character as a sequential user operation, e.g., that the next character is selected immediately (within a predetermined time) after the selection of the first character, with no interval.

When in this step S3 any normal character is not selected in succession (i.e., when a symbol such as [ₒ (.)] and a special character (e.g., a pictorial character or the like) is selected or when an interval of not less than the predetermined time is placed), it can be judged that one phrase is finished, and thus the operation returns to step S1. On the other hand, when in step S3 any normal character is selected in succession, a successive selection frequency counter for the normal character is incremented by one (step S4).

Then, the calculation accumulator 11 accumulates use frequency information (information of the first character counter and the successive selection frequency counter) at this moment in the use frequency database 12 (step S5). Thereafter, if the input of character is not finished (i.e., when any character is selected in succession), the operation returns to step S3; on the other hand, if the input of character is finished, the process of Fig. 2 is terminated.

In the calculation accumulator 11 in Fig. 1, as an example, with selection of any character, the character use history creator 11A creates a history about what character was selected (character selection history) and accumulates the created character selection history as a log in the character use history database 11B. Then, the use frequency calculator 11C executes the aforementioned sequential process of Fig. 2 with reference to the character selection histories in the character use history database 11B and accumulates the use frequency information (information of the first character counter and the successive selection frequency counter) in the use frequency database 12.

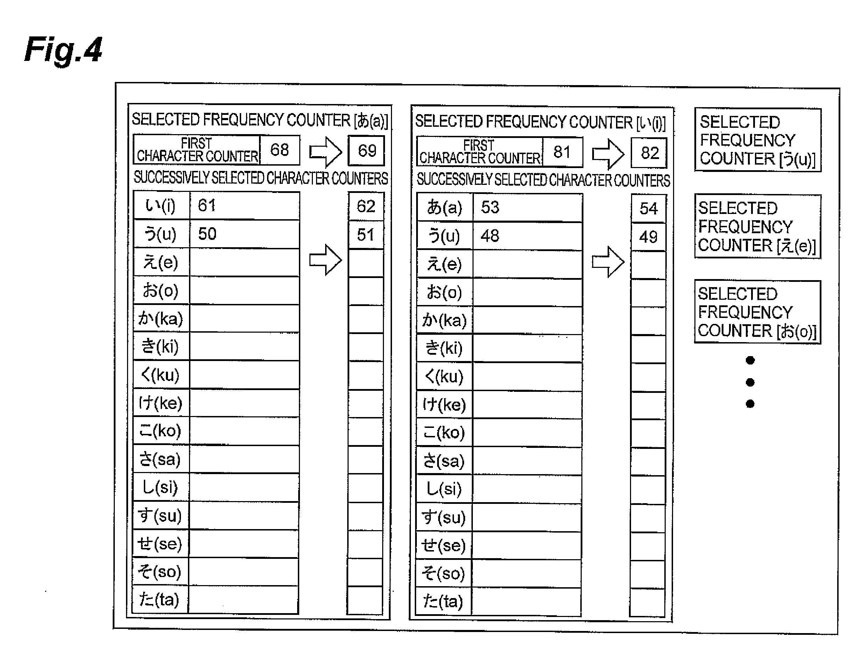

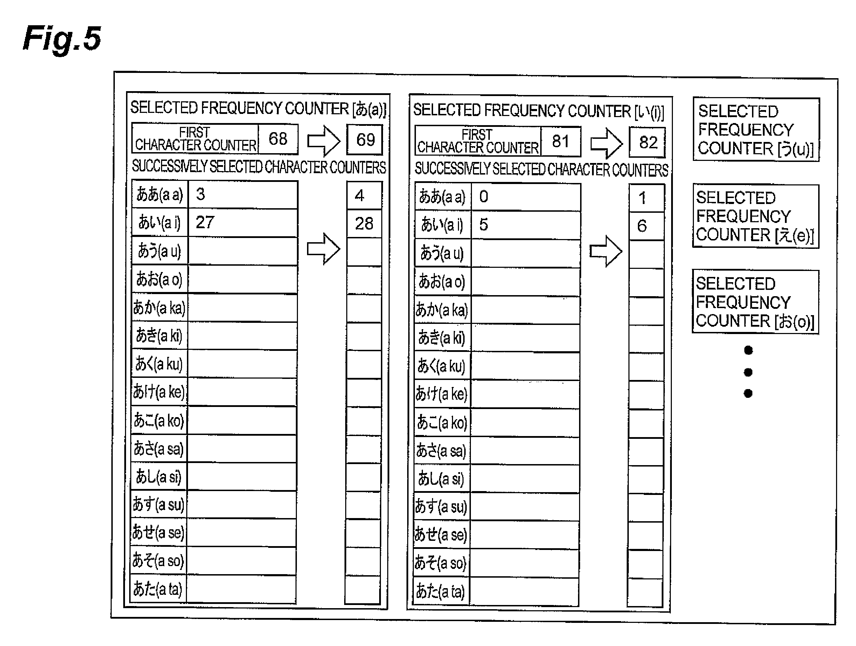

Configuration examples of the first character counter and the successive selection frequency counter will be described below using Figs. 4 and 5.

In the first example, as shown in Fig. 4, there are provided "selected frequency counters" for the respective characters, i.e., "selected frequency counter [ 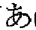 (a)]," "selected frequency counter [ 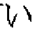 (i)]," "selected frequency counter [ 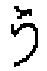 (u)]," ··· and the "selected frequency counter" of each character includes a "first character counter" for counting a frequency of selection of the pertinent character as first character and "successive selection frequency counters" each of which is for one character of a normal character selected in succession to the pertinent character. For example, when the input is [ 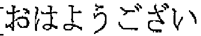 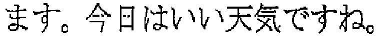 (ohayougozaimasu. kiyouhai i te n ki de su ne.)], the counters are incremented as described below.

First, as to the first character [ 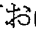 (o)], the first character counter in the "selected frequency counter [ 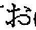 (o)]" (which will be referred to hereinafter as "[ 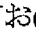 (o)] sheet") is incremented by one and then, as to the second character [ 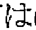 (ha)], the "successive selection frequency counter" for [ 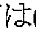 (ha)] in the [(o)] sheet is incremented by one. Thereafter, as to the third character [ 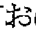 (yo)], the "successive selection frequency counter" for [ 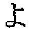 (yo)] in the [ 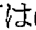 (ha)] sheet is incremented by one and then, as to the fourth character [ 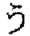 (u)], the successive selection frequency counter" for [ 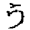 (u)] in the [ 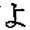 (yo)] sheet is incremented by one. Thereafter, the count operation continues until it is judged that one phrase is finished with selection of [ₒ (.)].

In the same manner for the next sentence, first as to the first character [ 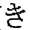 (ki)], the first character counter in the [ 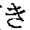 (ki)] sheet is incremented by one and then, as to the second character [ 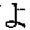 (yo)], the "successive selection frequency counter" for [ 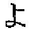 (yo)] in the [ 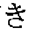 (ki)] sheet is incremented by one. Subsequently, as to the third character [ 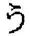 (u)], the " successive selection frequency counter" for [ 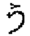 (u)] in the [ 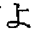 (yo)] sheet is incremented by one and, thereafter, the count operation continues until it is judged that one phrase is finished with selection of [ₒ (.)].

In the second example, as shown in Fig. 5, there are provided "selected frequency counters" for the respective characters, i.e., "selected frequency counter [ 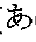 (a)]," "selected frequency counter [ 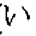 (i)]," "selected frequency counter [ 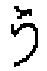 (u)]," ... and the "selected frequency counter" of each character includes a "first character counter" for counting a frequency of selection of the pertinent character as first character and "successive selection frequency counters" each of which is for two characters of normal characters selected in succession to the pertinent character. It is considered that expansion of ranges of accumulated histories as described above allows prediction of input frequencies for respective words, so as to further enhance convenience. For example, when the input is [ 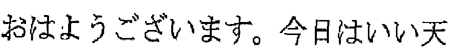 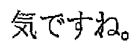 (o ha yo u go za i ma su. ki yo u ha i i te n ki de su ne.)], the counters are incremented as described below.

First, as to the first character [ 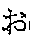 (o)], the first character counter in the "selected frequency counter [ 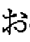 (o)]" (which will be referred to hereinafter as "[ 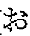 (o)] sheet") is incremented by one and then, as to the successive characters [ 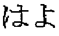 (ha yo)], the "successive selection frequency counter" for [ 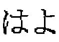 (ha yo)] in the [ 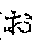 (o)] sheet is incremented by one. Thereafter, as to the next successive characters [ 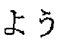 (yo u)], the "successive selection frequency counter" for [ 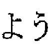 (yo u)] in the [ 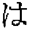 (ha)] sheet is incremented by one and then, as to the next successive characters [ 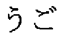 (u go)], the successive selection frequency counter" for [ 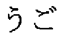 (u go)] in the [ 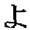 (yo)] sheet is incremented by one. Thereafter, the count operation continues until it is judged that one phrase is finished with selection of [ₒ (.)].

In the same manner for the next sentence, first as to the first character [ 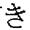 (ki)], the first character counter in the [ 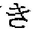 (ki)] sheet is incremented by one and then, as to the next successive characters [ 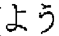 (yo u)], the "successive selection frequency counter" for [ 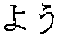 (yo u)] in the [ 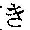 (ki)] sheet is incremented by one. Subsequently, as to the next successive characters [ 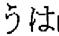 (u ha)], the "successive selection frequency counter" for [ 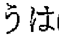 (u ha)] in the [ 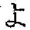 (yo)] sheet is incremented by one, and, thereafter, the count operation continues until it is judged that one phrase is finished with selection of [ₒ (.)].

### [Display Control Process of Characters]

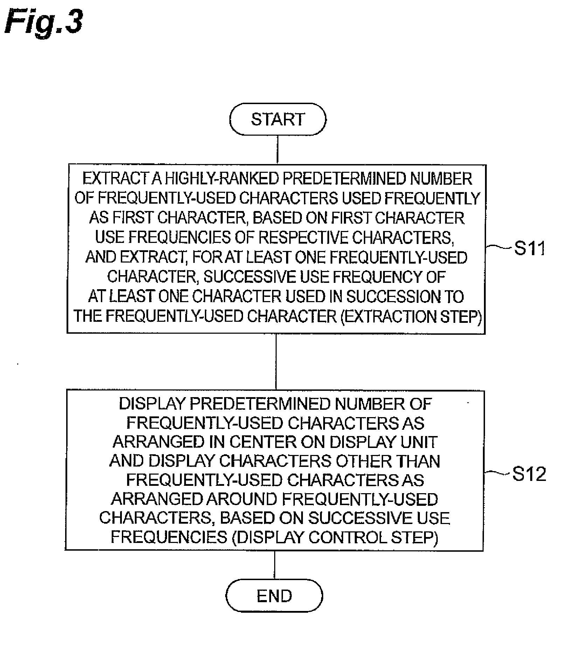

A display control process of characters will be described below using Fig. 3. As shown in Fig. 3, the display control process of characters includes an extraction step (step S11) and a display control step (step S12). The first character use frequencies and the successive use frequencies accumulated in the use frequency database 12 are continuously updated by the aforementioned calculation accumulation process of use frequencies (Fig. 2) and the extraction step and the display control step in Fig. 3 are repetitively executed, based on the updated first character use frequencies and successive use frequencies. Execution cycles, character arrangement methods, etc. can have a variety of variations as described below.

First, the extraction step and the display control step as basic steps will be described. In the extraction step (step S11), the first character extractor 13 extracts a highly-ranked predetermined number of frequently-used characters used frequently as first character, based on the first character use frequencies of the respective characters, and the successive use frequency extractor 14 extracts, for at least one frequently-used character, the successive use frequency of at least one character used in succession to the frequently-used character. In the display control step (step S12), the display controller 15 displays the predetermined number of frequently-used characters as arranged in a center on the display 16 and displays the characters other than the frequently-used characters as arranged around the frequently-used characters, based on the successive use frequencies.

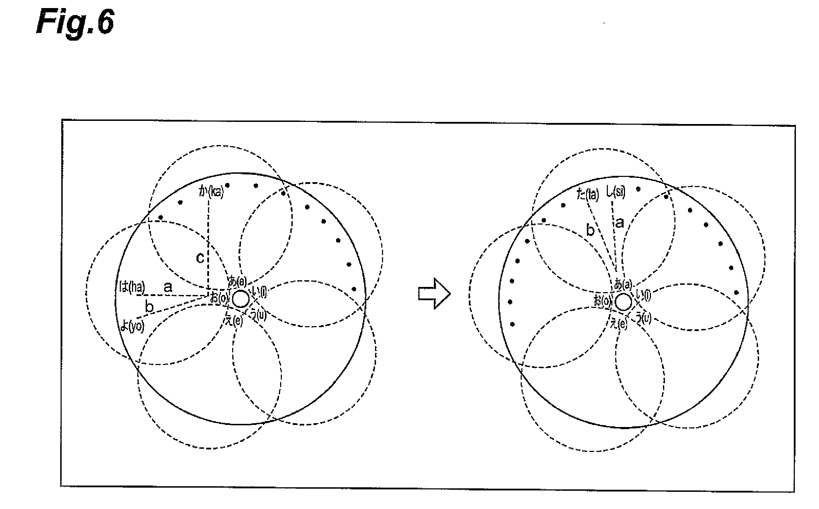

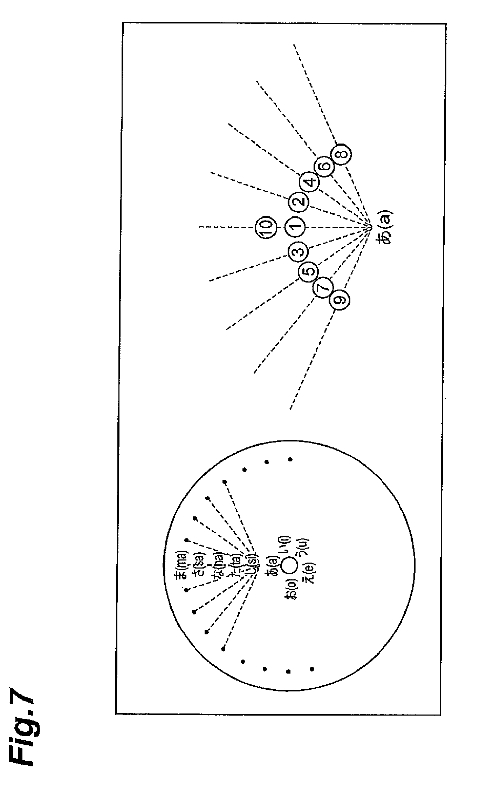

Processing examples of the display control process of characters will be described below using Figs. 6 and 7.

First, the first example will be described using Fig. 6. Default character arrangement is such that five characters [ 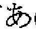 (a), 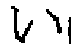 (i), 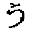 (u), 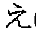 (e), and 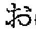 (o)] are arranged on a ring of a small circle in the center on the display 16 and the rest characters are arranged on a ring of a large circle with a radius larger than that of the center ring. Defaults on the large circle may be arranged based on the successive selection frequencies for a predetermined one character (e.g., [ 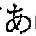 (a)]) out of the above five characters.

Thereafter, the process of Fig. 3 is executed at predetermined timing (e.g., at timing of selection of the next first character, on a predetermined time cycle, at predetermined dates and times, or the like), thereby to, based on up-to-date frequency data accumulated in the use frequency database, extract the highly-ranked predetermined number of frequently-used characters (highly-ranked five characters herein as an example) used frequently as first character and extract the successive use frequencies for at least one frequently-used character (a character at the first rank of first character use frequency herein as an example), and to arrange the highly-ranked five frequently-used characters on the ring of the small circle in the center on the display 16 and arrange the characters other than the frequently-used characters in frequency order on the large circle, based on the successive use frequencies of successive selection after the character arranged on the small circle. For example, as to the characters other than the frequently-used characters, the characters other than the frequently-used characters may be arranged in frequency order on the ring of the large circle, based on the successive use frequencies of successive selection after the character at the first rank of first character use frequency.

The following may be adopted as specific arrangement logic. After a character is selected either on the small circle or on the large circle, characters with high use frequencies are displayed around the character. As shown in Fig. 6, when [ 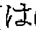 (ha)] is selected in succession to selection of [ 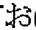 (o)], the arrangement of neighborhood is redisplayed in decreasing order of frequency of use in succession to [ 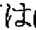 (ha)]. If a magnitude relationship of frequencies of selection in succession to the first character [ 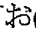 (o)] is "[ 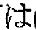 (ha)] > [ 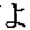 (yo)] > [ 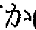 (ka)]", the characters [ 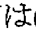 (ha)], [ 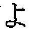 (yo)], and [ 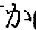 (ka)] are arranged so as to satisfy a relation of distance a < distance b < distance c shown in Fig. 6, where each distance is defined as a distance from the position of character [ 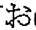 (o)]. It is noted that distance a represents a distance between [ 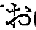 (o)] and [ 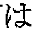 (ha)], distance b represents a distance between [ 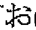 (o)] and [ 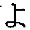 (yo)], and distance c represents a distance between [ 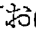 (o)] and [ 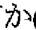 (ka)]. Since the frequency information of characters to be successively selected in a case where the user pushes [ 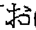 (o)] as the first character is different from that in a case where the user pushes [ 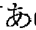 (a)] as the first character, the arrangement of characters on the large circle is also different.

As apparent from Fig. 6, the position of character [ 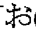 (o)] is not the center of the circle and, for this reason, distance a, distance b, and distance c are different from each other. The arrangement logic to be adopted may be such that if there are identical frequencies but no identical distances, the characters are arranged first at the shorter distance according to the Japanese 50-character syllabary and if there are identical distances but no identical frequencies, the characters are arranged clockwise first with the higher frequency.

Although Fig. 6 shows the example in which the characters are arranged on the two rings of the small circle and the large circle, it is noted that the characters may be arranged on three or more rings.

Next, the second example will be described using Fig. 7. Default character arrangement is such that five characters [ 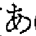 (a), 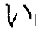 (i), 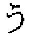 (u), 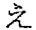 (e), and 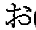 (o)] are arranged on a ring of a small circle in the center on the display 16 and the rest characters are arranged on an arc of at least one Japanese fan shape centered on predetermined one character (e.g., [ 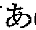 (a)]) out of the foregoing five characters.

Thereafter, the process of Fig. 3 is executed at predetermined timing (e.g., at timing of selection of the next first character, on a predetermined time cycle, at predetermined dates and times, or the like), thereby to, based on up-to-date frequency data accumulated in the use frequency database, extract the highly-ranked predetermined number of frequently-used characters (highly-ranked five characters herein as an example) used frequently as first character and extract the successive use frequencies for at least one frequently-used character (a character at the first rank of first character use frequency herein as an example), and to arrange the highly-ranked five frequently-used characters on the ring of the small circle in the center on the display 16 and arrange the characters other than the frequently-used characters in frequency order on an arc of a Japanese fan shape, based on the successive use frequencies of successive selection after the character arranged on the small circle. For example, as to the characters other than the frequently-used characters, the characters other than the frequently-used characters may be arranged in frequency order on an arc of at least one Japanese fan shape centered on the character at the first rank of first character use frequency, based on the successive use frequencies of successive selection after the character at the first rank of first character use frequency.

### For example, the following may be adopted as specific arrangement logic. The characters with high successive use frequencies are arranged in increasing order of distance on arcs of Japanese fan shapes centered on one character out of the characters on the small circle. Virtual nine lines indicted by dashed lines in Fig. 7 are assumed for the foregoing one character on the small circle and five characters are arranged on each line. By this, the five characters on the ring of the small circle and forty five characters around them (i.e., five characters × nine lines) total fifty characters.

Arrangement in frequency order of the characters other than the frequently-used characters on arcs of Japanese fan shapes is such that the characters are arranged in order from the closest arc to the farthest arc to the center and the characters on the same arc are arranged in an order of "middle → right → left" on the arc. The arrangement order of "middle" followed by "right" is determined with consideration to the fact that the number of right-handers is greater than that of left-handers. For example, as shown in the right drawing of Fig. 7, the characters are arranged in an order of (1) to (10). It is noted that arrangement with selection of a character except for those in the center is also such that the characters are rearranged and displayed based on the successive use frequencies to the character.

The various embodiments of the invention described above achieve the effect that the efficiency of the character input operation is further enhanced with consideration to the association of a plurality of characters used in succession and smooth and quick character input is realized.

### [Other Configuration of Character Input Device]

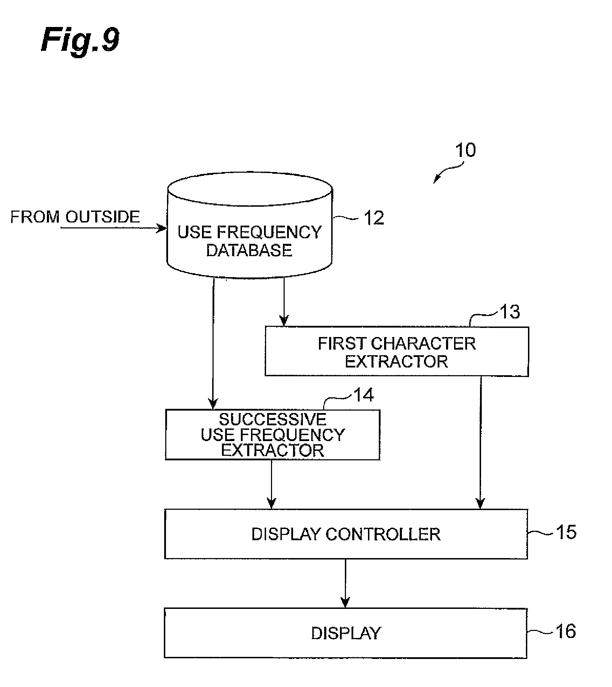

It is noted that it is not essential to provide the calculation accumulator 11 in the character input device 10 and that the configuration in Fig. 9 (configuration without the calculation accumulator 11) may be adopted as configuration of the character input device 10. When the configuration of Fig. 9 is adopted, the character input device can be configured to acquire the up-to-date information about the first character use frequencies and successive use frequencies determined based on the past character use histories, from outside and put the information into the use frequency database 12.

### Reference Signs List

10: character input device; 10A: CPU; 10B: RAM; 10C: ROM; 10D: display device; 10E: communication device; 10F: auxiliary memory device; 11: calculation accumulator; 11A: character use history creator; 11B: character use history database; 11C: use frequency calculator; 12: use frequency database; 13: first character extractor; 14: successive use frequency extractor; 15: display controller; 16: display.

## Claims

1. A character input device comprising:
a display for displaying a plurality of character candidates for a character to be input;
a use frequency database that accumulates, for each character, a first character use frequency of use as first character and a successive use frequency of at least one character used in succession to the character;
a first character extractor that extracts a highly-ranked predetermined number of frequently-used characters used frequently as first character, based on the first character use frequencies of respective characters;
a successive use frequency extractor that extracts, for at least one frequently-used character, the successive use frequency of at least one character used in succession to the frequently-used character, from the use frequency database; and
a display controller that displays the predetermined number of frequently-used characters as arranged in a center on the display and that displays the characters other than the frequently-used characters as arranged around the frequently-used characters, based on the successive use frequencies.

2. The character input device according to claim 1, further comprising:
a calculation accumulator that calculates, for each character, the first character use frequency of use as first character and the successive use frequency of at least one character used in succession to the character, based on past character use histories, and accumulates the calculated first character use frequency and successive use frequency in the use frequency database.

3. The character input device according to claim 1 or 2,
wherein the display controller displays the predetermined number of frequently-used characters as arranged on a ring in the center on the display, and displays the characters other than the frequently-used characters as arranged on at least one ring with a radius larger than that of the ring in the center, based on the successive use frequencies.

4. The character input device according to claim 1 or 2,
wherein the display controller displays the predetermined number of frequently-used characters as arranged on a ring in the center on the display, and displays the characters other than the frequently-used characters as arranged on an arc of at least one Japanese fan shape centered on the frequently-used character on the display, based on the successive use frequencies.

5. A character input method executed by a character input device comprising: a display for displaying a plurality of character candidates for a character to be input; and a use frequency database accumulating, for each character, a first character use frequency of use as first character and a successive use frequency of at least one character used in succession to the character,
the character input method comprising:
an extraction step of extracting a highly-ranked predetermined number of frequently-used characters used frequently as first character, based on the first character frequencies of respective characters, and extracting, for at least one frequently-used character, the successive use frequency of at least one character used in succession to the frequently-used character, from the use frequency database; and
a display control step of displaying the predetermined number of frequently-used characters as arranged in a center on the display, and displaying the characters other than the frequently-used characters as arranged around the frequently-used characters, based on the successive use frequencies, and
wherein the first character use frequencies and successive use frequencies accumulated in the use frequency database are continuously updated, and
wherein the extraction step and the display control step are executed based on the first character use frequencies and successive use frequencies updated.
